(19) Europäisches Patentamt
European Patent Office
Office européen des brevets

(11) **EP 2 964 504 B1**

(12) **FASCICULE DE BREVET EUROPEEN**

(45) Date de publication et mention de la délivrance du brevet:
**16.08.2017 Bulletin 2017/33**

(21) Numéro de dépôt: **14713162.7**

(22) Date de dépôt: **20.02.2014**

(51) Int Cl.:
**B60W 30/19** *(2012.01)*  **B60W 10/06** *(2006.01)*

(86) Numéro de dépôt international:
**PCT/FR2014/050350**

(87) Numéro de publication internationale:
**WO 2014/135759 (12.09.2014 Gazette 2014/37)**

(54) **DISPOSITIF DE DÉTECTION D'ENVOLÉE DE RÉGIME D'UN MOTEUR THERMIQUE COUPLÉ À UNE BOÎTE DE VITESSES MANUELLE D'UN VÉHICULE**

VORRICHTUNG ZUR ERKENNUNG EINES GESCHWINDIGKEITSANSTIEGS IN EINER MIT EINEM HANDSCHALTGETRIEBE EINES FAHRZEUGS GEKOPPELTEN WÄRMEKRAFTMASCHINE

DEVICE FOR DETECTING A SURGE IN SPEED IN A HEAT ENGINE COUPLED WITH A MANUAL GEARBOX OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.03.2013 FR 1351987**

(43) Date de publication de la demande:
**13.01.2016 Bulletin 2016/02**

(73) Titulaire: **Peugeot Citroën Automobiles SA 78140 Vélizy Villacoublay (FR)**

(72) Inventeurs:
• **THOMAS, Mathieu**
  **78280 Guyancourt (FR)**
• **CHARLES, Juliette**
  **78510 Triel Sur Seine (FR)**
• **ZUMELLA, Franck**
  **78400 Chatou (FR)**

(56) Documents cités:
EP-A1- 1 865 227    EP-A2- 1 164 046
DE-A1-102009 032 745

**Description**

L'invention concerne les véhicules, éventuellement de type automobile, et comprenant une boîte de vitesses manuelle destinée à être couplée à un moteur thermique via un embrayage, et plus précisément la détection d'un état de débrayage effectif et l'utilisation de cet état détecté au sein de tels véhicules.

Certains véhicules du type précité mettent en oeuvre une stratégie de détermination du couple devant être effectivement fourni par leur moteur thermique pour respecter au mieux la volonté de leur conducteur en matière d'accélération et de vitesse. DE 10 2009 032 745 divulgue une adaptation du couple moteur utilisant un couple d'inertie. EP-A-1 164 046 porte sur le contrôle d'un embrayage Plus précisément, lorsque le conducteur appuie sur la pédale d'accélérateur, un couple de consigne Cc est calculé en fonction du régime en cours du moteur thermique et du rapport qui est engagé dans la boite de vitesse. Ce couple de consigne Cc est ensuite filtré préventivement afin que les jeux de la chaine de transmission induisent le moins d'à-coups possible.

Le résultat de ce filtrage donne un couple préventif Cp qui est ensuite converti en un couple indiqué Ci, en prenant en compte un couple de pertes du moteur thermique Cpm. Généralement, ce couple indiqué Ci est égal à la somme du couple préventif Cp et du couple de pertes Cpm (soit Ci = Cp + Cpm). Il est rappelé que le couple de pertes Cpm regroupe toutes les pertes de couple du moteur thermique qui peuvent être estimées dans le véhicule à l'instant considéré. Parmi ces pertes, on peut notamment citer celles qui sont dues au fonctionnement du moteur (frottements, pompage, dégommage de la boîte de vitesses manuelle, pompe à huile), celles qui sont dues au fonctionnement de l'alternateur, et celles qui sont dues au fonctionnement d'une éventuelle installation de climatisation et/ou d'une éventuelle direction assistée.

Le couple indiqué Ci alimente ensuite un module dédié à la détermination d'un couple final Cf. Ce dernier (Cf) est soit égal au couple indiqué Ci si le régime de ralenti n'est pas instauré, soit égal à un couple de ralenti correspondant au rapport engagé si le régime de ralenti est instauré.

Ce couple final Cf est transmis au gestionnaire du moteur thermique pour qu'il le mette en oeuvre via des commandes destinées à différents organes.

Dans certains véhicules, la reconnaissance du rapport qui est engagé dans la boîte de vitesses se fait notamment en fonction d'une information d'état lj qui est délivrée par un capteur d'état de type binaire. Plus précisément, ce capteur d'état délivre soit une première information d'état I1 (correspondant au point mort) lorsque la pédale d'embrayage est enfoncée par un pied de conducteur, soit une seconde information d'état I2 (correspondant à un rapport engagé) lorsque la pédale d'embrayage n'est pas du tout enfoncée. Il est donc impossible de savoir si le conducteur débraye complètement ou effleure légèrement la pédale d'embrayage, par exemple pour anticiper un arrêt ou un prochain changement de rapport (notamment lors d'une manoeuvre de stationnement, ou dans un suivi de file dans un embouteillage, ou en conduite urbaine).

Afin d'éviter de ne pas appliquer le filtrage précité en présence d'une première information d'état I1 alors même que le débrayage n'est pas physiquement effectif (puisqu'il n'y a pas de filtrage au point mort), la stratégie ne tient plus compte de l'information d'état lj qui est fournie par le capteur d'état si un rapport est reconnu pendant un intervalle de temps qui est supérieur à un seuil calibrable. Par exemple, si le résultat du calcul de ce que l'homme de l'art appelle « la V1000 » appartient pendant typiquement une seconde (par exemple) à un intervalle correspondant à un rapport engagé alors que le capteur d'état délivre une première information d'état I1, la stratégie considère que l'embrayage est dans son état effectif embrayé, afin d'obtenir un filtrage robuste. Il est rappelé que la V1000 consiste à assimiler le rapport engagé au résultat de la multiplication par 1000 du rapport entre la vitesse en cours du véhicule et le régime en cours du moteur thermique.

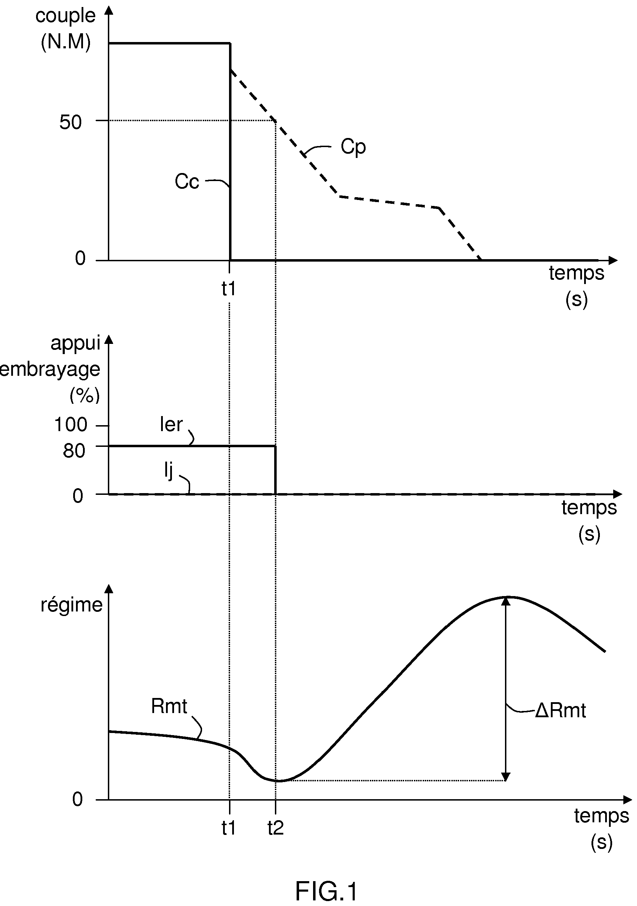

Cependant, si le conducteur débraye réellement, le gestionnaire du moteur thermique ne va pas pouvoir s'en apercevoir puisque le capteur d'état indique que l'embrayage est ouvert (ou débrayé (courbe lj de la figure 1)). Par conséquent, et comme illustré sur la figure 1, lorsque le conducteur cesse d'enfoncer la pédale d'accélérateur (courbe Cc) à l'instant t1, un filtrage préventif est réalisé (courbe Cp), ce qui induit à l'instant t2 (où le débrayage est effectué (courbe ler)) une envolée (ΔRmt) du régime (Rmt) du moteur thermique (ou « overshoot »), qui correspond au rapport entre le couple effectif du moteur thermique et l'inertie de ce dernier. Cette envolée (ΔRmt) non désirée lors d'un changement de rapport s'avère d'autant plus gênante que l'inertie du moteur thermique est faible.

Dans cet exemple, le conducteur débraye à l'instant t2 (courbe ler) alors que le couple préventif Cp est égal à 50 Nm, ce qui entraine une envolée de régime (ΔRmt) d'environ 250 tours/min pendant environ une seconde lorsque le moteur thermique a une inertie de 0,2 kg.m$^2$.

L'invention a donc notamment pour but d'améliorer la situation.

Elle propose notamment à cet effet un dispositif de détection destiné à équiper un véhicule comprenant une boîte de vitesses manuelle, propre à être couplée à un moteur thermique via un embrayage couplé à une pédale d'embrayage, et un capteur d'état délivrant une première ou seconde information d'état selon que la pédale d'embrayage est enfoncée ou non enfoncée.

Ce dispositif de détection se caractérise par le fait qu'il comprend des moyens d'analyse agencés, en présence d'une première information d'état et lorsqu'au moins une condition sécuritaire est remplie :

- pour déterminer un écart entre un couple effectif et un couple inertiel du moteur thermique, puis
- pour détecter un état de débrayage effectif lorsqu'au moins un critère primaire choisi, relatif à cet écart, est rempli, et
- pour décider qu'il existe un risque d'envolée d'un régime en cours du moteur thermique si le rapport engagé dans la boîte de vitesses est changé, en cas de détection de l'état de débrayage effectif et lorsqu'au moins un critère secondaire choisi, relatif au régime en cours, est rempli.

Cette détection des débrayages effectifs et des envolées de régime est de nature à permettre une amélioration de l'agrément de conduite et des prestations du véhicule lors des phases transitoires d'accélération.

Le dispositif de détection selon l'invention peut comporter d'autres caractéristiques qui peuvent être prises séparément ou en combinaison, et notamment :

- ses moyens d'analyse peuvent être agencés, en cas d'existence d'un risque d'envolée, pour déclencher une coupure d'injection de carburant dans le moteur thermique ;
- ses moyens d'analyse peuvent être agencés pour déterminer si chaque condition sécuritaire est remplie ;
- chaque condition sécuritaire peut être choisie parmi au moins i) la présence simultanée de la première information d'état et d'une information auxiliaire représentative du rapport engagé reconnu dans la boîte de vitesses, ii) le régime en cours supérieur à un premier seuil choisi, iii) le régime en cours supérieur à un régime de ralenti associé au rapport engagé reconnu dans la boîte de vitesses, iv) l'absence de coupure d'injection de carburant dans le moteur thermique, v) l'absence de signalement d'un défaut de fonctionnement propre à fausser une estimation du couple effectif du moteur thermique, vi) une dérivée par rapport au temps de la position de la pédale d'accélérateur du véhicule inférieure à un deuxième seuil choisi, et vii) le couple effectif du moteur thermique supérieur à un troisième seuil choisi ;
- ses moyens d'analyse peuvent être agencés pour décider qu'il existe un risque d'envolée lorsque chaque critère primaire et chaque critère secondaire sont remplis pendant une durée choisie ;
- chaque critère primaire peut être choisi parmi au moins i) l'écart de couple inférieur ou égal à un quatrième seuil, et ii) la dérivée par rapport au temps de l'écart de couple inférieure ou égale à un cinquième seuil ;
- le critère secondaire peut être relatif à la valeur de la dérivée par rapport au temps du régime en cours. Dans ce cas, les moyens d'analyse sont agencés pour considérer que le critère secondaire est rempli lorsque cette valeur est supérieure ou égale à un sixième seuil.

L'invention propose également un dispositif de calcul de couple, d'une première part, destiné à équiper un véhicule comprenant une boîte de vitesses manuelle, propre à être couplée à un moteur thermique via un embrayage couplé à une pédale d'embrayage, et un capteur d'état délivrant une première ou seconde information d'état selon que la pédale d'embrayage est enfoncée ou non enfoncée, d'une deuxième part, propre à déterminer un couple final devant être fourni par le moteur thermique, en fonction au moins de l'information d'état qui est fournie par le capteur d'état, d'un régime en cours du moteur thermique, d'une vitesse en cours du véhicule, d'un pourcentage d'enfoncement (ou d'appui) de la pédale d'accélérateur du véhicule et d'un couple de pertes du moteur thermique, et, d'une troisième part, comprenant un dispositif de détection du type de celui présenté ci-avant.

L'invention propose également un calculateur, d'une part, destiné à équiper un véhicule comprenant une boîte de vitesses manuelle, propre à être couplée à un moteur thermique via un embrayage couplé à une pédale d'embrayage, et un capteur d'état délivrant une première ou seconde information d'état selon que la pédale d'embrayage est enfoncée ou non enfoncée, et, d'autre part, comprenant un dispositif de calcul de couple du type de celui présenté ci-avant.

L'invention propose également un véhicule, éventuellement de type automobile, et comprenant, d'une première part, une boîte de vitesses manuelle, propre à être couplée à un moteur thermique via un embrayage couplé à une pédale d'embrayage, d'une deuxième part, un capteur d'état délivrant une première ou seconde information d'état selon que la pédale d'embrayage est enfoncée ou non enfoncée, et, d'une troisième part, un calculateur du type de celui présenté ci-avant.

D'autres caractéristiques et avantages de l'invention apparaîtront à l'examen de la description détaillée ci-après, et des dessins annexés, sur lesquels :

- la figure 1 illustre schématiquement i) au sein d'un premier diagramme (supérieur) de première (Cc) et deuxième (Cp) courbes d'évolution temporelle d'un couple de consigne (conducteur) et d'un couple préventif, ii) au sein d'un deuxième diagramme (intermédiaire) de première (Ier) et deuxième (Ij) courbes d'évolution temporelle d'une information d'état réel de l'embrayage et d'une information d'état délivré par le capteur d'état, et iii) au sein d'un troisième diagramme (inférieur) une courbe (Rmt) d'évolution temporelle du régime d'un moteur thermique en présence des courbes Cc, Cp, Ier et Ij, et

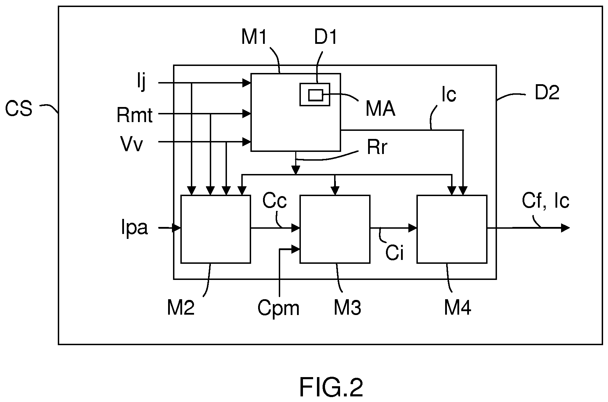

- la figure 2 illustre schématiquement et fonctionnellement un calculateur comprenant un exemple de dispositif de calcul de couple comprenant un exemple de réalisation d'un dispositif de détection selon l'invention.

L'invention a pour but de proposer un dispositif de détection D1 destiné à équiper un véhicule comprenant une boîte de vitesses manuelle, propre à être couplée à un moteur thermique via un embrayage couplé à une pédale d'embrayage, et un capteur d'état, délivrant une première I1 ou seconde 12 information d'état selon que la pédale d'embrayage est enfoncée (ne serait-ce que partiellement) ou non enfoncée.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout véhicule terrestre, fluvial (ou maritime) ou aérien, dès lors qu'il comprend, d'une part, un moteur thermique, une boîte de vitesses manuelle et un embrayage propres à être couplés les uns aux autres, et, d'autre part, un capteur d'état de l'embrayage de type binaire.

On a schématiquement représenté sur la figure 2 un exemple de calculateur CS chargé de contrôler le fonctionnement du moteur thermique d'un véhicule (ici de type automobile). Ce calculateur CS comprend un dispositif de calcul de couple D2 chargé de déterminer un couple final Cf devant être fourni par le moteur thermique, en fonction au moins de l'information d'état Ij (j = 1 ou 2) qui est fournie par le capteur d'état, du régime en cours du moteur thermique Rmt, de la vitesse du véhicule Vv, du pourcentage d'enfoncement (ou d'appui) de la pédale d'accélérateur Ier et du couple de pertes du moteur thermique Cpm.

Comme illustré non limitativement sur la figure 2, ce dispositif de calcul de couple D2 peut comporter quatre modules M1 à M4.

Le premier module M1 est notamment chargé de reconnaître le rapport Rr qui est engagé dans la boîte de vitesses en fonction au moins de l'information d'état Ij, du régime en cours (du moteur thermique) Rmt et de la vitesse du véhicule Vv. Pour ce faire, il peut, par exemple, assimiler le rapport engagé Rr au résultat de la multiplication par 1000 du rapport entre la vitesse du véhicule Vv et le régime en cours Rmt (technique dite « V1000 »), lorsque ce résultat appartient pendant typiquement une seconde (par exemple) à un intervalle correspondant à un rapport engagé alors que le capteur d'état délivre une première information d'état I1.

Le deuxième module M2 est notamment chargé d'estimer un couple de consigne Cc, représentatif de la volonté du conducteur (lorsque ce dernier appuie sur la pédale d'accélérateur), en fonction du régime en cours Rmt et du rapport engagé Rr reconnu par le premier module M1.

Le troisième module M3 est notamment chargé d'estimer par un filtrage préventif un couple préventif Cp, destiné à limiter autant que possible les à-coups induits par les jeux de la chaine de transmission, en fonction du rapport engagé Rr reconnu par le premier module M1 et du couple de consigne Cc estimé par le deuxième module M2. Ce troisième module M3 est également chargé de convertir ce couple préventif Cp estimé en un couple indiqué Ci, en prenant en compte le couple de pertes du moteur thermique Cpm. Pour ce faire, il peut assimiler le couple indiqué Ci à la somme du couple préventif Cp et du couple de pertes Cpm (soit Ci = Cp + Cpm).

Le quatrième module M4 est notamment chargé d'estimer le couple final Cf en fonction du couple indiqué Ci estimé par le troisième module M3, du rapport engagé Rr reconnu par le premier module M1 et d'une information signalant si le moteur thermique est dans un régime de ralenti. Ce couple final Cf est soit égal au couple indiqué Ci si le régime de ralenti n'est pas instauré, soit égal à un couple de ralenti qui correspond au rapport engagé Rr si le régime de ralenti est instauré.

L'invention propose notamment d'adjoindre au véhicule un dispositif de détection D1. Dans l'exemple non limitatif illustré sur la figure 2, le dispositif de détection D1 fait partie du dispositif de calcul de couple D2. Mais il pourrait être externe à ce dispositif de calcul de couple D2, tout en étant couplé à ce dernier (D2). Il pourrait être également externe au calculateur CS, tout en étant couplé à ce dernier (CS). Dans ce dernier cas, il peut être lui-même agencé sous la forme d'un calculateur dédié comprenant un éventuel programme dédié, par exemple. Par conséquent, un dispositif de détection D1, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels.

On notera que dans l'exemple non limitatif illustré sur la figure 2, le dispositif de détection D1 fait partie du premier module M1 du dispositif de calcul de couple D2. Mais dans des variantes de réalisation il pourrait faire partie du troisième module M3 du dispositif de calcul de couple D2, ou bien constituer un cinquième module du dispositif de calcul de couple D2, par exemple intercalé entre les troisième M3 et quatrième M4 modules.

Comme illustré sur la figure 2, un dispositif de détection D1, selon l'invention, comprend au moins des moyens d'analyse MA chargés d'intervenir chaque fois que le capteur d'état délivre une première information d'état I1.

Plus précisément, les moyens d'analyse MA sont tout d'abord agencés, en présence d'une première information d'état I1 et lorsqu'au moins une condition sécuritaire est remplie, pour déterminer un écart ε entre un couple effectif Cem du moteur thermique et un couple inertiel Cim du moteur thermique, soit ε = Cem - Cim.

On entend ici par « couple inertiel » le résultat de la multiplication de l'inertie du moteur thermique Imt (connue par ailleurs (et constante)) par la dérivée par rapport au temps du régime en cours du moteur thermique Rmt (ou dN/dt, où N est le nombre de tours par minute effectué par le vilebrequin du moteur thermique), soit Cim = Imt * Rmt.

On notera que les moyens d'analyse MA peuvent être également agencés pour déterminer si chaque condition sécuritaire est remplie.

Par exemple, chaque condition sécuritaire peut être choisie dans la liste non exhaustive suivante :

- il doit y avoir la présence simultanée de la première information d'état I1 et d'une information auxiliaire représentative du rapport engagé Rr reconnu par le premier module M1. Cette condition traduit un risque d'overshoot du fait qu'elle indique que le véhicule circule alors que son conducteur à un pied sur la pédale d'embrayage (partiellement enfoncée) et donc que le dispositif de détermination de couple D2 ne saura pas reconnaitre un vrai débrayage physique,

- le régime en cours Rmt doit être supérieur à un premier seuil choisi. Ce dernier peut être calibrable. Par exemple, il peut être choisi égal à 1500 tours/min car en dessous, les overshoots sont faibles et le risque de fausse détection d'overshoot est important,

- le régime en cours Rmt doit être supérieur à un régime de ralenti qui est associé au rapport engagé reconnu Rr. Le ralenti ne doit en effet pas être instauré car une coupure de l'injection de carburant (pour une raison évoquée plus loin) ferait caler le moteur thermique,

- il doit y avoir une absence de coupure d'injection de carburant dans le moteur thermique,

- il doit y avoir une absence de signalement d'un défaut de fonctionnement propre à fausser l'estimation du couple effectif du moteur thermique Cem et donc susceptible d'engendrer des fausses détections d'overshoot. C'est notamment le cas, par exemple, d'un défaut de récupération des gaz d'échappement ou d'un défaut de fonctionnement de la pédale d'accélérateur,

- la dérivée par rapport au temps de la position de la pédale d'accélérateur Ipa doit être inférieure à un deuxième seuil choisi. En effet, seule cette dérivée permet, lorsqu'elle est négative, d'anticiper un levé de pied franc et donc d'éviter les fausses détections d'overshoot lors de certaines phases de roulage, comme par exemple pendant un suivi de file,

- le couple effectif du moteur thermique Cem doit être supérieur à un troisième seuil choisi. Ce dernier peut être calibrable du fait que c'est le couple effectif du moteur thermique qui induit un overshoot. Plus ce couple effectif est important et plus l'envolée sera forte.

De préférence, les moyens d'analyse MA vérifient si au moins les sept conditions sécuritaires précitées sont remplies (ou satisfaites) simultanément. Si tel est le cas, alors ils considèrent que les conditions sont réunies pour que l'embrayage puisse être dans un état de débrayage effectif et donc qu'il est pertinent qu'ils procèdent à la détection de cet état de débrayage effectif.

A cet effet, les moyens d'analyse MA sont donc également agencés pour détecter un état de débrayage effectif lorsqu'au moins un critère primaire choisi, relatif audit écart, est rempli, et pour décider qu'il existe un risque d'envolée du régime en cours Rmt si le rapport engagé dans la boîte de vitesses est changé, en cas de détection de cet état de débrayage effectif et lorsqu'au moins un critère secondaire choisi, relatif à ce régime en cours Rmt, est rempli.

De préférence, les moyens d'analyse MA peuvent être également agencés, lorsqu'ils ont détecté un risque d'envolée, pour déclencher une coupure d'injection de carburant dans le moteur thermique, de manière à éviter l'occurrence de cette envolée. On comprendra en effet que si le moteur thermique ne reçoit plus de carburant temporairement, il ne peut plus produire de couple et donc l'overshoot est stoppé. L'injection reste coupée jusqu'à la prochaine ré-accélération. Ce déclenchement d'une demande de coupure d'injection peut par exemple se faire par la production d'une information de coupure Ic qui peut être transmise, ici, au quatrième module M4, afin qu'il la communique avec le couple final Cf au calculateur CS en vue de sa prise en compte immédiate.

Par exemple, chaque critère primaire peut être choisi dans la liste non exhaustive suivante :

- l'écart de couple ε doit être inférieur ou égal à un quatrième seuil. En effet, en prise, lorsque le couple effectif Cem est positif, celui-ci est supérieur au couple inertiel Cim (= Imt * Rmt). Par conséquent, ce critère correspond à l'existence d'une convergence du couple effectif Cem et du couple inertiel Cim. Il est donc préférable de travailler en « synchrone moteur » et de synchroniser le régime Rmt et le couple effectif Cem,

- la dérivée par rapport au temps de l'écart de couple ε (dε/dt) doit être inférieure ou égale à un cinquième seuil. En effet, lorsque l'on débraye, le couple inertiel Cim se rapproche du couple effectif moteur Cem, et donc il y a une forte variation négative de l'écart de couple ε. Ce critère permet de valider cet état de fait et donc de connaitre l'état de la chaine de transmission.

De préférence, les moyens d'analyse MA vérifient si au moins les deux critères précités sont remplis (ou satisfaits) simultanément.

Egalement par exemple, un critère secondaire peut être relatif à la valeur de la dérivée par rapport au temps du régime en cours Rmt (dRmt/dt). Dans ce cas, les moyens d'analyse MA sont agencés pour considérer que le critère secondaire est rempli (ou satisfait) lorsque la valeur de dRmt/dt est supérieure ou égale à un sixième seuil. En effet, lorsqu'il y a un overshoot le régime Rmt est croissant. Par conséquent, plus le couple effectif Cem est élevé et plus la dérivée du régime dRmt/dt est importante, du fait que le couple effectif Cem est lié à l'inertie du moteur thermique Imt par la relation suivante :

$$\text{Cem} = \text{Iem.dW/dt, où W} = 2.\pi.\text{N/60.}$$

On notera qu'il est également préférable que les moyens d'analyse MA soient agencés pour décider qu'il existe un risque d'envolée (ou overshoot) lorsque chaque critère primaire et chaque critère secondaire sont remplis pendant une durée choisie. Cette dernière peut être calibrable par exemple en fonction du nombre de points morts hauts du moteur thermique.

L'invention permet d'améliorer l'agrément de conduite et les prestations du véhicule lors des phases transitoires d'accélération, grâce à la détection des débrayages effectifs et des overshoots, et à l'empêchement d'occurrence de ces derniers.

**Revendications**

1. Dispositif de détection (D1) pour un véhicule comprenant une boîte de vitesses manuelle, propre à être couplée à un moteur thermique via un embrayage couplé à une pédale d'embrayage, et un capteur d'état délivrant une première ou seconde information d'état selon que ladite pédale d'embrayage est enfoncée ou non enfoncée, **caractérisé en ce qu'**il comprend des moyens d'analyse (MA) agencés, en présence d'une première information d'état et lorsqu'au moins une condition sécuritaire est remplie, pour déterminer un écart entre un couple effectif et un couple inertiel dudit moteur thermique, puis pour détecter un état de débrayage effectif lorsqu'au moins un critère primaire choisi, relatif audit écart, est rempli, et pour décider qu'il existe un risque d'envolée d'un régime en cours dudit moteur thermique en cas de changement d'un rapport engagé dans ladite boîte de vitesses, en cas de détection dudit état de débrayage effectif et lorsqu'au moins un critère secondaire choisi, relatif audit régime en cours, est rempli.

2. Dispositif selon la revendication 1, **caractérisé en ce que** lesdits moyens d'analyse (MA) sont agencés, en cas d'existence d'un risque d'envolée, pour déclencher une coupure d'injection de carburant dans ledit moteur thermique.

3. Dispositif selon l'une des revendications 1 et 2, **caractérisé en ce que** lesdits moyens d'analyse (MA) sont agencés pour déterminer si chaque condition sécuritaire est remplie.

4. Dispositif selon l'une des revendications 1 à 3, **caractérisé en ce que** chaque condition sécuritaire est choisie dans un groupe comprenant au moins i) une présence simultanée de ladite première information d'état et d'une information auxiliaire représentative d'un rapport engagé reconnu dans ladite boîte de vitesses, ii) ledit régime en cours est supérieur à un premier seuil choisi, iii) ledit régime en cours est supérieur à un régime de ralenti associé audit rapport engagé reconnu dans ladite boîte de vitesses, iv) une absence de coupure d'injection de carburant dans ledit moteur thermique, v) une absence de signalement de défaut de fonctionnement propre à fausser une estimation dudit couple effectif du moteur thermique, vi) une dérivée par rapport au temps d'une position d'une pédale d'accélérateur est inférieure à un deuxième seuil choisi, et vii) ledit couple effectif du moteur thermique est supérieur à un troisième seuil choisi.

5. Dispositif selon l'une des revendications 1 à 4, **caractérisé en ce que** lesdits moyens d'analyse (MA) sont agencés pour décider qu'il existe un risque d'envolée lorsque chaque critère primaire et chaque critère secondaire sont remplis pendant une durée choisie.

6. Dispositif selon l'une des revendications 1 à 5, **caractérisé en ce que** chaque critère primaire est choisi dans un groupe comprenant au moins i) ledit écart est inférieur ou égal à un quatrième seuil, et ii) une dérivée par rapport au temps dudit écart est inférieure ou égale à un cinquième seuil.

7. Dispositif selon l'une des revendications 1 à 6, **caractérisé en ce que** ledit critère secondaire est relatif à une valeur d'une dérivée par rapport au temps dudit régime en cours, et **en ce que** lesdits moyens d'analyse (MA) sont agencés pour considérer que ledit critère secondaire est rempli lorsque ladite valeur est supérieure ou égale à un sixième seuil.

8. Dispositif de calcul de couple (D2) pour un véhicule comprenant une boîte de vitesses manuelle, propre à être couplée à un moteur thermique via un embrayage couplé à une pédale d'embrayage, et un capteur d'état délivrant une première ou seconde information d'état selon que ladite pédale d'embrayage est enfoncée ou non enfoncée, ledit dispositif (D2) étant propre à déterminer un couple final devant être fourni par ledit moteur thermique, en fonction au moins de l'information d'état fournie par ledit capteur d'état, d'un régime en cours dudit moteur thermique, d'une vitesse en cours dudit véhicule, d'un pourcentage d'enfoncement d'une pédale d'accélérateur du véhicule et d'un couple de pertes dudit moteur thermique, **caractérisé en ce qu'**il comprend un dispositif de détection (D1) selon l'une des revendications précédentes.

9. Calculateur (CS) pour un véhicule, **caractérisé en ce qu'**il comprend un dispositif de calcul de couple (D2) selon la revendication 8.

10. Véhicule comprenant une boîte de vitesses manuelle, propre à être couplée à un moteur thermique via un embrayage couplé à une pédale d'embrayage, et un capteur d'état délivrant une première ou seconde information d'état selon que ladite pédale d'embrayage est enfoncée ou non enfoncée, **caractérisé en ce qu'**il comprend en outre un calculateur (CS) selon la revendication 9.

**Patentansprüche**

1. Erfassungsvorrichtung (D1) für ein Fahrzeug, das ein Handschaltgetriebe umfasst, das geeignet ist, mit einer Wärmekraftmaschine über eine Kupplung gekoppelt zu werden, die mit einem Kupplungspedal gekoppelt ist, und einen Zustandssensor, der eine erste oder zweite Zustandsinformation je nachdem liefert, ob das Kupplungspedal gedrückt ist oder nicht gedrückt ist, **dadurch gekennzeichnet, dass** sie Analysemittel (MA) umfasst, die eingerichtet sind, um in Gegenwart einer ersten Zustandsinformation und wenn mindestens eine Sicherheitsbedingung erfüllt ist, einen Unterschied zwischen dem effektiven Drehmoment und einem Trägheitsmoment der Wärmekraftmaschine zu bestimmen, dann, um einen effektiven Auskuppelzustand zu erfassen, wenn mindestens ein Primärkriterium, das in Bezug zu dem Unterschied ausgewählt wird, erfüllt ist, und um zu bestimmen, dass eine Gefahr eines Überdrehens einer aktuellen Drehzahl der Wärmekraftmaschine in dem Fall eines Gangwechsels in dem Schaltgetriebe existiert, falls der Zustand des effektiven Auskuppelns erfasst wird und mindestens ein ausgewähltes Sekundärkriterium in Bezug auf die aktuelle Drehzahl erfüllt ist.

2. Vorrichtung nach Anspruch 1, **dadurch gekennzeichnet, dass** die Analysemittel (MA) für den Fall des Existierens einer Überdrehgefahr eingerichtet sind, um eine Kraftstoffeinspritzunterbrechung in der Wärmekraftmaschine auszulösen.

3. Vorrichtung nach einem der Ansprüche 1 und 2, **dadurch gekennzeichnet, dass** die Analysemittel (MA) eingerichtet sind, um zu bestimmen, ob jede Sicherheitsbedingung erfüllt ist.

4. Vorrichtung nach einem der Ansprüche 1 bis 3, **dadurch gekennzeichnet, dass** jede Sicherheitsbedingung aus einer Gruppe ausgewählt ist, die mindestens umfasst, dass i) eine gleichzeitige Gegenwart der ersten Zustandsinformation und einer Hilfsinformation, die für einen eingerückten Gang, der in dem Schaltgetriebe erkannt wird, repräsentativ ist, ii) dass die aktuelle Drehzahl größer ist als ein erster ausgewählter Schwellenwert, iii) dass die aktuelle Drehzahl größer ist als ein Leerlauf, der mit dem eingerückten Gang, der in dem Schaltgetriebe erkannt wird, assoziiert ist, iv) ein Fehlen von Kraftstoffeinspritzunterbrechung in der Wärmekraftmaschine, v) ein Fehlen eines Meldens eines Betriebsfehlers, der eine Schätzung des effektiven Drehmoments der Wärmekraftmaschine verfälschen könnte, vi) eine Drift in Bezug zur Zeit einer Position eines Gaspedals niedriger ist als ein zweiter ausgewählter Schwellenwert, und vii) das effektive Drehmoment der Wärmekraftmaschine größer ist als ein ausgewählter Schwellenwert.

5. Vorrichtung nach einem der Ansprüche 1 bis 4, **dadurch gekennzeichnet, dass** die Analysemittel (MA) eingerichtet sind, um zu entscheiden, ob eine Gefahr des Überdrehens besteht, wenn jedes Primärkriterium und jedes Sekundärkriterium während einer ausgewählten Dauer erfüllt sind.

6. Vorrichtung nach einem der Ansprüche 1 bis 5, **dadurch gekennzeichnet, dass** jedes Primärkriterium aus einer Gruppe ausgewählt ist, die mindestens i) umfasst, dass der Unterschied kleiner oder gleich einem vierten Schwellenwert ist, und ii) eine Drift in Bezug zur Zeit des Unterschieds kleiner oder gleich einem fünften Schwellenwert ist.

7. Vorrichtung nach einem der Ansprüche 1 bis 6, **dadurch gekennzeichnet, dass** das Sekundärkriterium einen Wert einer Drift in Bezug auf Zeit der aktuellen Drehzahl betrifft, und dass die Analysemittel (MA) eingerichtet sind, um davon auszugehen, dass das Sekundärkriterium erfüllt ist, wenn der Wert größer oder gleich einem sechsten Schwellenwert ist.

8. Drehmomentberechnungsvorrichtung (D2), für ein Fahrzeug, das ein Handschaltgetriebe umfasst, das geeignet ist, um mit einer Wärmekraftmaschine über eine Kupplung gekoppelt zu sein, die mit einem Kupplungspedal gekoppelt ist, und einen Zustandssensor, der eine erste oder zweite Zustandsinformation je nachdem liefert, ob das Kupplungspedal gedrückt ist oder nicht, wobei die Vorrichtung (D2) geeignet ist, um ein Enddrehmoment, das von der Wärmekraftmaschine geliefert werden muss, in Abhängigkeit von einer aktuellen Drehzahl der Wärmekraftmaschine, einer aktuellen Geschwindigkeit des Fahrzeugs, eines Eindrückprozentsatzes eines Gaspedals des Fahrzeugs und eines Verlustmoments der Wärmekraftmaschine zu bestimmen, **dadurch gekennzeichnet, dass** sie eine Erfassungsvorrichtung (D1) nach einem der vorhergehenden Ansprüche umfasst.

9. Rechner (CS) für ein Fahrzeug, **dadurch gekennzeichnet, dass** er eine Drehmomentberechnungsvorrichtung (D2) nach Anspruch 8 umfasst.

10. Fahrzeug, das ein Handschaltgetriebe umfasst, das geeignet ist, mit einer Wärmekraftmaschine über eine Kupplung gekoppelt zu werden, die mit einem Kupplungspedal gekoppelt ist, und einen Zustandssensor, der eine erste oder zweite Zustandsinformation je nachdem, ob das Kupplungspedal gedrückt ist oder nicht gedrückt ist zu liefern, **dadurch gekennzeichnet, dass** es außerdem einen Rechner (CS) nach Anspruch 9 umfasst.

**Claims**

1. A detection device (D1) for a vehicle including a manual gearbox, suitable to be coupled with a heat engine via a clutch coupled with a clutch pedal, and a status sensor delivering a first or second piece of status information depending on whether or not said clutch pedal is depressed, **characterized in that** it includes analysis means (MA) arranged, in the presence of a first piece of status information and when at least one safety condition is fulfilled, to determine a deviation between an effective torque and an inertial torque of said heat engine, then to detect an effective clutch status when at least one selected primary criterion, relating to said deviation, is fulfilled, and to decide if there exists a risk of surge of a current speed of said heat engine if an engaged ratio is changed in said gearbox, in the event that said effective clutch status is detected and when at least one selected secondary criterion, relating to said current speed, is fulfilled.

2. The device according to Claim 1, **characterized in that** said analysis means (MA) are arranged, in the event of the existence of a risk of surge, to trigger a fuel injection cut-off in said heat engine.

3. The device according to one of Claims 1 and 2, **characterized in that** said analysis means (MA) are arranged to determine whether each safety condition is fulfilled.

4. The device according to one of Claims 1 to 3, **characterized in that** each safety condition is selected from a group including at least i) a simultaneous presence of said first piece of status information and of an auxiliary piece of information representing a recognized engaged ratio in said gearbox, ii) said current speed is greater than a first selected threshold, iii) said current speed is greater than an idle speed associated with said recognized engaged ratio in said gearbox, iv) an absence of fuel injection cut-off in said heat engine, v) an absence of signalling of a functional fault able to distort an estimation of said effective torque of the heat engine, vi) a derivative with respect to time of a position of an accelerator pedal is less than a second selected threshold, and vii) said effective torque of the heat engine is greater than a third selected threshold.

5. The device according to one of Claims 1 to 4, **characterized in that** said analysis means (MA) are arranged to decide if there exists a risk of surge when each primary criterion and each secondary criterion are fulfilled during a selected period.

6. The device according to one of Claims 1 to 5, **characterized in that** each primary criterion is selected from a group including at least i) said deviation is less than or equal to a fourth threshold, and ii) a derivative with respect to time of said deviation is less than or equal to a fifth threshold.

7. The device according to one of Claims 1 to 6, **characterized in that** said secondary criterion relates to a value of a derivative with respect to time of said current speed, and **in that** said analysis means (MA) are arranged to consider that said secondary criterion is fulfilled when said value is greater than or equal to a sixth threshold.

8. A torque calculation device (D2) for a vehicle including a manual gearbox, suitable to be coupled with a heat engine via a clutch coupled with a clutch pedal, and a status sensor delivering a first or second piece of status information depending on whether or not said clutch pedal is depressed, said device (D2) being suitable to determine a final torque to be supplied by said heat engine, as a function at least of the piece of status information provided by said status sensor, of a current speed of said heat engine, of a current speed of said vehicle, of a percentage of depression of an accelerator pedal of the vehicle and of a torque loss of said heat engine, **characterized in that** it includes a detection device (D1) according to one of the preceding claims.

9. A computer (CS) for a vehicle, **characterized in that** it includes a torque calculation device (D2) according to Claim 8.

10. A vehicle including a manual gearbox, suitable to be coupled with a heat engine via a clutch coupled with a clutch pedal, and a status sensor delivering a first or second piece of status information depending on whether or not said clutch pedal is depressed, **characterized in that** it further includes a computer (CS) according to Claim 9.

FIG.1

FIG.2

**EP 2 964 504 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- DE 102009032745
- EP 1164046 A